# EUROPEAN PATENT APPLICATION

(11) **EP 2 058 046 A2**
(43) Date of publication of application: **13.05.2009**
(21) Application number: 08168586.9
(22) Date of filing: 07.11.2008
(51) Int. Cl.: B01D 61/16, B02C 18/00, B01D 63/06, C12G 1/00

(54) **Filtering machine for tangential filtration**

(30) Priority: 12.11.2007 IT TV20070180
(71) Applicant: VELO Spa, 31030 Altivole (Treviso) (IT)
(72) Inventor: Velo, Antonio, 31031, Caerano San Marco (TV) (IT)
(74) Representative: Dragotti, Gianfranco

(57) **Abstract**

A machine (M) for filtering a liquid which contains suspended bodies, comprising a set of filtering elements (80), a first system of pipes (88) for supplying the liquid to be filtered into the filter set, and a second system of outlet pipes (89) from the filter set for removing the filtered liquid. The invention consists in means (10) for dispersing the suspended bodies before they reach the inlet of the filter set.

## Description

The invention relates to a filtering machine or apparatus useful for performing the tangential filtration of liquids which contain suspended bodies and/or clogging solids.

Although the invention is useful for treating any pressed plant product or a generic liquid product containing suspended solids which may aggregate, the description which follows will refer by way of example to vinification processes, a sector in which the invention has proved to be particularly effective.

It is known that in wine treatment processes, the pressed product must be filtered.

An efficient system makes use of tangential filters with capillary membranes (similar to small pipes), a technology in which the Applicant is at the forefront.

A bundle of tubular membranes is used, these having a certain diameter and precisely distributed pores with a diameter such that the operator is able to obtain a perfectly clear product with minimum effort and without colour retention.

Although efficient systems for cleaning the membranes exist, with certain types of product the latter tend to get clogged up, in particular in the case where the product contains colloidal substances and/or filamentous organic fibres with large diameters greater than or comparable to the diameter of the tubular membrane. In the case where industrial liquids are filtered the filaments may nevertheless be of both an organic and non-organic nature.

The object of the present intention is to solve the abovementioned problem of clogging.

This object is achieved with a machine for filtering a liquid which contains suspended bodies, comprising:
- a set of filtering elements;
- a first system of pipes supplying the liquid to be filtered into the filter set;
- a second system of outlet pipes from the filter set for removing the filtered liquid;
characterized in that it comprises means for dispersing the suspended bodies before they reach the inlet of the filter set.

In this way the risk of clogging is minimized.

Preferred variants of the machine, to be implemented individually or in combination, are as follows:
- said means (50) are arranged in series with the first system of pipes and upstream of the filter set inlet;
- the filtering elements comprise tubular membranes;
- said dispersion means comprise a dispersion mill with a rotating cutting member;
- the rotating member comprises one or more sharpened vanes which are able to rotate substantially in contact with the surface of a diaphragm which has perforations or micro perforations;
- the diaphragm consists of a plate with perforations or micro perforations;
- the mill is composed of a first flanged body and a second flanged body which are mounted coaxially and can be clamped together along the respective flanges, the diaphragm being mounted substantially flush with the flange of the first body and therefore being substantially perpendicular to the direction of flow of the liquid;
- the first body comprises radial reinforcing bars or blades for opposing the pressure of the flowing liquid exerted on the surface of the diaphragm;
- said bars or blades are serrated;
- the first body is funnel-shaped;
- the second body has substantially the form of a hollow cylinder with a flanged edge of larger cross-section, the second body also comprising a radial inlet for the liquid and a shaft which extends axially for transmission of the rotating movement generated by a gear motor to the vanes;
- the gear motor is mounted on the outside of the second body and said shaft is supported inside the second body by a sleeve integral with a wall of the latter.

The invention also relates to a mill which can be applied to the inlet of a machine for filtering a liquid containing suspended bodies as described, which is designed as indicated in the above paragraphs and in the description which follows.

A preferred embodiment of the invention will now be described with reference to the accompanying drawing in which:
Fig. 1 shows a block diagram of a filtering machine or apparatus according to the invention;
Fig. 2 shows a front view of a dispersion mill according to the invention which can be associated with the machine according to Fig. 1;
Fig. 3 shows a cross-sectioned side view of the mill according to Fig. 1 along the plane III-III;
Fig. 4 shows a three-dimensional view of a first detached component of the mill according to Fig. 1;
Fig. 5 shows a three-dimensional view of a second detached component of the mill according to Fig. 1;
Fig. 6 shows an enlarged detail of the zone inside the circle shown in broken lines in Fig. 3.

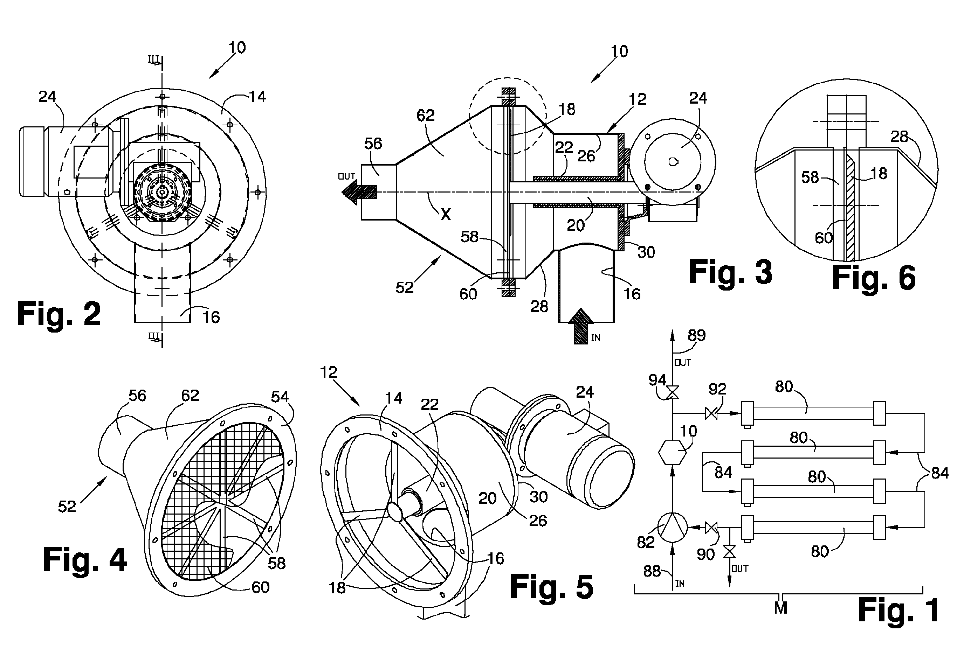

With reference to the block diagram in Fig. 1, this shows a filtering machine assembly M comprising a set of filtering elements 80 arranged in series (and/or parallel), namely the outlet of one element is connected to the inlet of the next one by a system of pipes 84. The arrows indicate the direction of flow of the fluid to be filtered.

This fluid is supplied by a system of supply pipes 88 which draw the fluid or liquid to be filtered from a remote storage tank (not shown) or from a branch line inside a treatment plant inside which the machine M is incorporated. A pump 82 ensures the necessary flow of fluid into the filter set. A valve 90 is provided at the outlet of the last element 80 in the series so that it is possible to select whether to recirculate the filtered liquid back to the pump 82.

As can be seen, the delivery side of the pump 82 is connected to the inlet of a dispersion mill 10, the outlet of which conveys the liquid either to the inlet of the filter set and/or outside the machine M via a system of pipes 89 by suitable selection of the state of two valves 92, 94.

The mill 10 is designed preferably as described below.

The mill is composed of two bodies 12, 52 which are modular and can be joined together by means of respective flanges 14, 54 and known fixing means.

The body 12 has a radial inlet duct 16 connected to a hollow cylindrical segment 26 which extends axially with a radial expansion segment 28. The flange 12 is formed on the edge of the segment 28.

A hollow support sleeve 22 extends axially from the centre of an (end) wall 30 of the cylindrical segment 26 and has, rotatably arranged inside it, a shaft 20 which may be rotated (about an axis X) by a gear motor 24 which is fixed on the outside of the wall 30.

Three identical sharpened vanes 18 are mounted, radially with respect to the axis X, on the free end of the shaft 20 which reaches the plane containing the flange 14 and extend as far as the flange 14.

The body 52 has a funnel-shaped casing 62 which terminates in a narrower outlet sleeve 56. The flange 54 is formed on the edge of the casing 62 which has a larger cross-section.

A plate 60 with perforations and/or micro perforations is arranged flush with the flange 54 (shown more clearly in Figs. 4 and 6) and makes contact with a support structure which is preferably formed with thin radial blades 58 - preferably serrated along one edge - arranged radially and with polar symmetry behind the plate 60.

Fig. 3 shows the assembled mill 10. It can be noted that the vanes 18 are able to rotate in a plane parallel to the plane containing the plate 60 and adjacent thereto.

The mill 10 operates in the following manner: the liquid to be filtered enters via the duct 16 and is directed towards the plate 60 which separates the suspended bodies from it and retains them on its surface (i.e. the surface facing the body 12); the vanes 18, actuated by the gear motor 24, simultaneously rotate about the axis X and cut and disperse any residual matter which accumulates on the plate 60. The speed of the vanes 18 is set to a value sufficient to break up the fibres or any agglomerations present in the liquid.

A further dispersing action is provided by the serrated edges of the blades 58 which co-operate with rotating vanes 18 on the other side of the plate 60.

The filtered liquid together with the dispersed suspended matter is then discharged via the sleeve 56.

## Claims

1. Machine (M) for filtering a liquid which contains suspended bodies, comprising:
- a set of filtering elements (80);
- a first system of pipes (88) for supplying the liquid to be filtered into the filter set;
- a second system of outlet pipes (89) from the filter set for removing the filtered liquid;
**characterized in that** it comprises means (10) for dispersing the suspended bodies before they reach the inlet of the filter set.

2. Machine (M) according to Claim 1, in which said means (50) are arranged in series with the first system of pipes and upstream of the inlet of the filter set.

3. Machine (M) according to Claims 1 or 2, in which the filtering elements comprise tubular membranes.

4. Machine (M) according to Claims 1 or 2, in which said dispersion means comprise a dispersion mill (10) which has a rotating cutting member (18).

5. Machine (M) according to Claim 4, in which the rotating member comprises one or more sharpened vanes (18) designed to rotate substantially in contact with the surface of a diaphragm (60) which has perforations or micro perforations.

6. Machine (M) according to Claim 5, in which the diaphragm consists of a plate (60) with perforations or micro perforations.

7. Machine (M) according to any one of Claims 4 to 6, in which the mill is composed of a first flanged body (52) and a second flanged body (12) which are mounted coaxially and can be clamped toegther along the respective flanges (14, 54), the diaphragm (60) being mounted substantially flush with the flange of the first body and therefore being substantially perpendicular to the direction of flow of the liquid.

8. Machine (M) according to Claim 7, in which the first body comprises radial reinforcing bars or blades (58) for opposing the pressure of the flowing liquid exerted on the surface of the diaphragm.

9. Machine (M) according to Claim 8, in which said bars or blades are serrated.

10. Machine (M) according to any one of Claims 7 to 9, in which the first body (12) is funnel-shaped.

11. Machine (M) according to any one of Claims 7 to 10, in which the second body has substantially the form of a hollow cylinder with a flanged edge of larger cross-section, the second body also comprising a radial inlet (16) for the liquid and an axially extending shaft (20) designed to transmit the rotational movement generated by a gear motor (24) to the vanes.

12. Machine (M) according to Claim 11, in which the gear motor is mounted on the outside of the second body and said shaft is supported inside the second body by a sleeve (22) integral with a wall (30) of the latter.

13. Mill (10) which can be applied to the inlet of a machine (M) for filtering a liquid containing suspended bodies, designed according to Claims 3 to 12.
